## Europäisches Patentamt
## European Patent Office
## Office européen des brevets

(11) Veröffentlichungsnummer: **0 422 540 A2**

# EUROPÄISCHE PATENTANMELDUNG

(21) Anmeldenummer: 90119221.1

(22) Anmeldetag: 06.10.90

(51) Int. Cl.⁵: **G01N 15/06, G01N 21/49**

(30) Priorität: 09.10.89 DE 3933681

(43) Veröffentlichungstag der Anmeldung:
17.04.91 Patentblatt 91/16

(84) Benannte Vertragsstaaten:
AT BE CH DE DK ES FR GB GR IT LI LU NL SE

(71) Anmelder: Battelle-Institut e.V.
Am Römerhof 35 Postfach 900 160
W-6000 Frankfurt/Main 90(DE)

(72) Erfinder: Raes, Karl-Heinz, Dr.
Rossertstrasse 103
W-6473 Steinbach/Ts.(DE)

(54) Gerät zur Messung des Anteils an Asbeststaub in Luft.

(57) Beschrieben wird ein Gerat zur schnellen Bestimmung des Asbeststaubanteils in Luft. Eingangsseitig des Geräts ist eine Vorrichtung vorgesehen, <iie den Staubanteil in der zu messenden Luft konzentriert. Daran angeschlossen ist eine Nachweiseinrichtung für fibrogene Staube und daran wiederum schließt sich eine Vorrichtung zum Analysieren an, die Asbestfasern von anderen Fasern unterscheidet.

Die erfindungsgemäße Vorrichtung zeichnet sich insbesondere durch eine schnelle Meßtechnik aus. Verglichen mit bekannten Meßtechniken nach der VDI-Richtlinie 3492, die eine Gesamtmeßzeit von etwa 16 Stunden benötigen, kommt das erfindungsgemaße Gerät mit einer Gesamtmeßzeit von weniger als einer halben Stunde aus.

EP 0 422 540 A2

## GERÄT ZUR MESSUNG DES ANTEILS AN ASBESTSTAUB IN LUFT

Die Erfindung betrifft ein Gerät zur Messung des Anteils an Asbeststaub in Luft mit einem Einlaß für die zu messende Luft, mit einem mit dem Einlaß in Strömungsverbindung stehenden Auslaß und mit einer Nachweiseinrichtung für Fasern.

Seitdem Asbestfasern als kanzerogen anerkannt sind, wird weltweit die Asbestsanierung vor allem öffentlich genutzter Gebäude betrieben. Dabei muß wiederholt die Konzentration von Asbestfasern in der Raumluft gemessen werden. Das geschieht in Deutschland entsprechend der VDI-Richtlinie 3492, wobei ein Teil der Raumluft etwa 8 Stunden lang über feinporige Filter gesaugt wird und 1 mm² der Filterfläche nach Kaltveraschung organischer Partikel mit dem Rasterelektronenmikroskop (REM) nach Fasern bestimmter Größenordnung abgesucht wird. Die Identifizierung von Asbest erfolgt mittels der energiedispersiven Röntgenanalyse (EDX). Die Analyse dauert ebenfalls bis zu 8 Stunden.

Die VDI-Methode ist teuer und zeitraubend. Es besteht ein großer Bedarf an einer schnellen Meßtechnik, mit der am Meßort die Asbestfaserkonzentration der Luft ermittelt wird.

Bekannt ist auch ein Gerät, mit dem sich der Anteil von Fasern in der Luft bestimmen läßt. Von diesem Gerät geht die Erfindung aus. Es besteht im wesentlichen in einer Düse, durch die Meßluft hindurchgeschickt wird, wobei durch geeignete Maßnahmen dafür gesorgt wird, daß in der Meßluft vorhandene Fasern sich im wesentlichen in Strömungs richtung ausrichten und die Düse in dieser Richtung verlassen. Sie treffen dann auf einen Laserlichtstrahl, der in ungestörtem Zustand von einer hinter der Auftreffstelle befindlichen Blende abgeblendet wird. Geht nun ein Teilchen durch den Lichtstrahl, so entsteht ein Beugungsmuster, welches von einem Detektor hinter der Lichtfalle nachgewiesen wird. Fasern erzeugen ein im allgemeinen längliches Beugungsmuster, während Teilchen mit im wesentlichen gleichen Abmessungen ein eher rundes Beugungsmuster erzeugen. Dadurch können also Fasern von anderen Teilchen unterschieden werden.

Dieses bekannte Gerät untersucht die Teilchen aber nicht in Bezug auf ihre chemische Zusammensetzung, d.h. dieses Gerät weist alle Fasern nach, auch wenn sie nicht aus Asbest bestehen. Dieses Gerät kann daher für die Messung des Anteils an Asbeststaub in Luft nur dann eingesetzt werden, wenn man sicher ist, daß die in der Luft enthaltenen Partikel gänzlich oder zumindest im wesentlichen aus Asbeststaub bestehen. Dieses Gerät erfüllt alle Anforderungen an die Genauigkeit der Fasererkennung und Meßgeschwindigkeit bei der Messung hoher Asbestfaserkonzentrationen an Asbestarbeitsplätzen. Zur Ermittlung des Asbestanteils im Luftstaub unter Bedingungen entsprechend der VDI-Richtlinie 3294, also sehr niedrigen Asbestfaserkonzentrationen und hoher Anteil anderer, auch faseriger Stäube kann es allerdings nicht eingesetzt werden, da es die gefundenen lungengängigen Fasern nicht bezüglich Asbest identifiziert.

Die US-Ps 3,770,351 beschreibt ein Gerat zur Messung des Anteils an Staub in einem Gas mit einem Einlaß für das zu messende Gas, mit einem mit dem Einlaß in Strömungsverbindung stehenden Auslaß und mit einer Nachweiseinrichtung für Fasern. Dem Auslaß ist eine Vorrichtung zum Analysieren der in der Nachweiseinrichtung nachgewiesenen Staubteilchen nachgeschaltet.

Mit diesem bekannten Gerat sollen Stäube allgemein bestimmt werden, nicht Asbeststaub. Dort wird der zu untersuchende Staub in einem Tragergas suspendiert und somit also verdunnt. Dies wiederum führt zu einer wesentlichen Verlängerung der Meßzeiten, so daß dieses bekannte Gerat den Anforderungen der Praxis nicht genügen würde, selbst wenn man es für die - dort nicht vorgesehene - Messung des Anteils an Asbeststaub in Luft einsetzen würde.

Ausgehend von einem Gerät mit den Merkmalen des Oberbegriffs von Patentanspruch 1 liegt daher der Erfindung die Aufgabe zugrunde, dieses Gerät so weiterzuentwickeln, daß mit ihm auch sehr niedrige Asbestfaserkonzentrationen gemessen werden können, wobei auch andere, faserige Stäube in der Meßluft enthalten sein können. Außerdem soll die Meßzeit beim Einsatz des erfindungsgemäßen Geräts fühlbar verringert werden.

Zur Lösung dieser Aufgabe ist die Erfindung dadurch gekennzeichnet, daß dem Einlaß eine Vorrichtung zum Konzentrieren des Staubanteils in der Luft vorgeschaltet ist und daß dem Auslaß eine Vorrichtung zum Analysieren der in der Nachweiseinrichtung nachgewiesenen Fasern nachgeschaltet ist.

Die vorgeschaltete Konzentrationsvorrichtung konzentriert wesentlich den Anteil der zu messenden Partikel in der Luft und trägt daher wesentlich zu der angestrebten Verkürzung der Meßzeit bei. Konzentrationen um den Faktor 20 sind realistisch. In der der Konzentrationsvorrichtung nachgeschalteten Nachweiseinrichtung werden die faserförmigen Partikel nachgewiesen. Zur Unterscheidung der nachgewiesenen Fasern in Asbestfasern und in Fasern aus anderen, unschädlichen Materialien dient die der Nachweiseinrichtung nachgeschaltete Analysiervorrichtung.

Für die Konzentrationsvorrichtung gibt es mehrere bevorzugte Ausführungsformen. Eine erste ist dadurch gekennzeichnet, daß ein feinporiges Filter als Teil der Wandung des Strömungskanals am Einlaß der Nachweiseinrichtung vorgesehen ist, wobei Mittel vorgesehen sind, die ein Anhaften der Teilchen am Filter verhindern. Dieses Anhaften soll weitestgehend verhindert werden, weil ja die Konzentration der Teilchen in der Luft anschließend gemessen werden soll. Solche Mittel, die ein Anhaften der Teilchen am Filter verhindern, sind beispielsweise eine geeignete elektrostatische Aufladung des Filters, ein Schwinger, der das Filter in Schwingungen versetzt, so daß dort evtl. anhaftende Teilchen wieder abfallen und mit dem Luftstrom fortgetragen werden und so fort.

Eine andere bevorzugte Ausführungsform dieser Konzentrationsvorrichtung weist einen Ultraschallgenerator auf, der im Strömungskanal stehende Wellen erzeugt. Bekanntlich sammeln sich Partikel in den Knoten stehender Wellen und die Vorrichtung arbeitet so, daß sich diese Knoten im mittleren Bereich des Strömungskanals befinden, wo die Partikel dann mit der Strömung ausgetragen werden.

Eine dritte bevorzugte Ausführungsform der Konzentrationsvorrichtung ist dadurch gekennzeichnet, daß diese einen luftdurchlässigen, elektrostatisch aufladbaren Wandabschnitt des Strömungskanals aufweist. Durch diesen Wandabschnitt werden die Teilchen gleichnamig in die Polarität des Wandabschnitts aufgeladen und erfahren daher eine elektrostatische Abstoßung von der Wand, wodurch verhindert wird, daß sie an der Wand anhaften. Durch diesen Wandabschnitt geht gleichzeitig die gewissermaßen gefilterte Luft als Abluft nach außen. An den Wandabschnitt kann sich eine Strecke anschließen, in der die aufgeladenen Teilchen wieder entladen werden, so daß sie elektrostatisch neutral der Nachweiseinrichtung zugeführt werden.

Bezüglich der Analysiervorrichtung wird es bevorzugt, wenn diese einen Laser aufweist, dessen Laserstrahl die im Strömungskanal fliegenden Teilchen trifft. Die vom Laserstrahl getroffenen Teilchen senden bei einer Ausführungsform ein Licht aus, das spektral untersucht wird, wodurch festgestellt wird, ob es sich um Asbestfasern handelt. Bei einer anderen Ausführungsform werden die vom Laserstrahl getroffenen Teilchen in einem Massenspektrometer untersucht.

Die Erfindung wird im folgenden anhand von Ausführungsbeispielen näher erläutert, aus dem sich weitere wichtige Merkmale ergeben. Es zeigt:

Fig. 1 schematisch die grundsätzliche Anordnung des erfindungsgemäßen Geräts;

Fig. 2 eine mit einem feinporigen Filter arbeitende Konzentrationsvorrichtung;

Fig. 3 eine mit Ultraschall arbeitende Konzentrationsvorrichtung;

Fig. 4 eine mit elektrostatischer Aufladung arbeitende Konzentrationsvorrichtung;

Fig. 5 schematisch die wesentlichen Bauelemente der Nachweiseinrichtung;

Fig. 6 das Aerosol- und Luftumwältzsystem der Nachweiseinrichtung;

Fig. 7 Einzelheiten der optischen Anordnung dieser Nachweiseinrichtung;

Fig. 8 ein Ausführungsbeispiel der Analysiervorrichtung, die mit Untersuchung des spektralen Lichts arbeitet;

Fig. 9 ein weiteres Ausführungsbeispiel der Analysevorrichtung, die hier als Massenspektrometer ausgebildet ist.

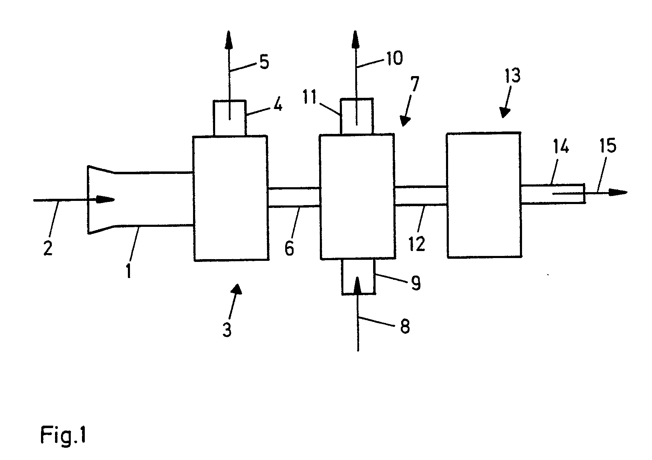

Zunächst sei anhand von Fig. 1 der grundsätzliche Ausbau des erfindungsgemäßen Geräts erläutert.

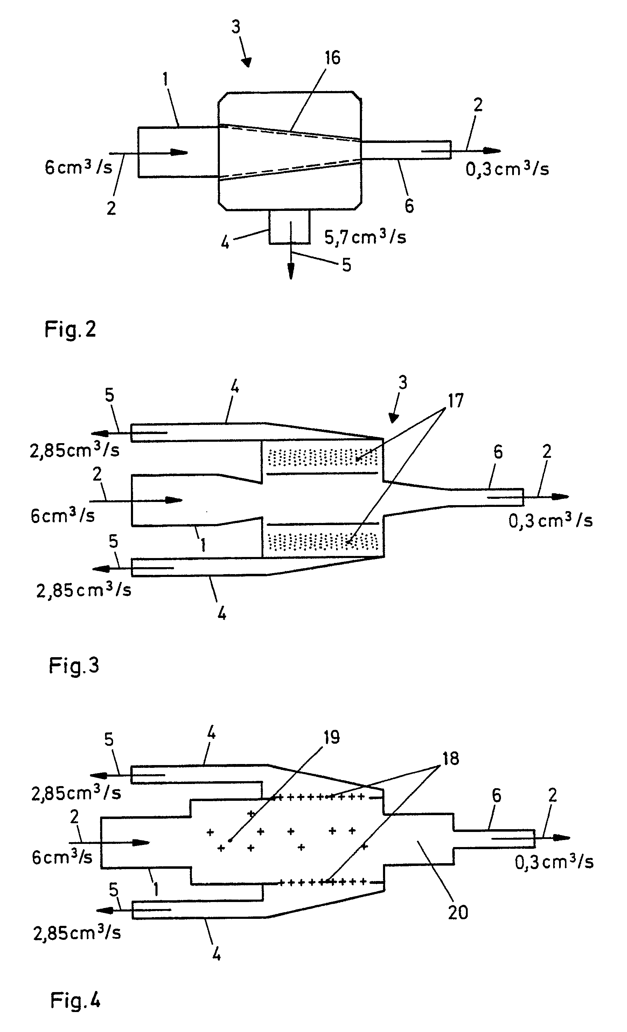

Über einen Ansaugkanal 1 wird in Richtung des Pfeiles 2 die zu untersuchende Luft einer Konzentrationsvorrichtung 3 zugeleitet. Ausführungsbeispiele dieser Konzentrationsvorrichtung werden im folgenden noch anhand der Figuren 2 - 4 näher erläutert.

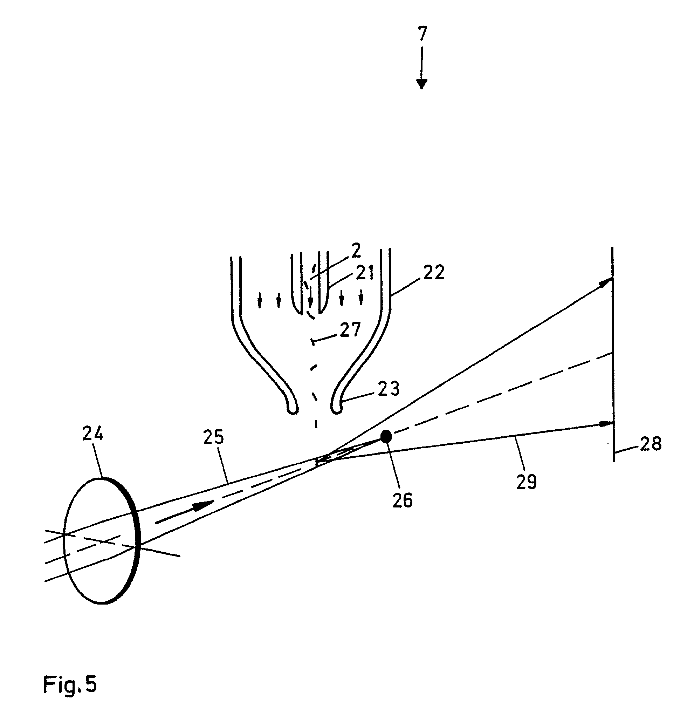

Partikelfreie Luft verläßt die Konzentrationsvorrichtung durch einen Auslaß 4 in Richtung des Pfeiles 5. Mit den Teilchen angereicherte Luft verläßt die Konzentrationsvorrichtung in Richtung des Pfeiles 2 durch einen Auslaß 6. Sie gelangt von dort in eine an sich bekannte Nachweiseinrichtung 7, deren grundsätzlicher Aufbau im folgenden anhand der Figuren 5 - 7 näher erläutert wird. Die Nachweiseinrichtung arbeitet mit Zuluft, die hier in Richtung des Pfeiles 8 über einen Einlaß 9 zugeleitet wird. Die Zuluft verläßt die Einrichtung in Richtung des Pfeiles 10 über einen Auslaß 11.

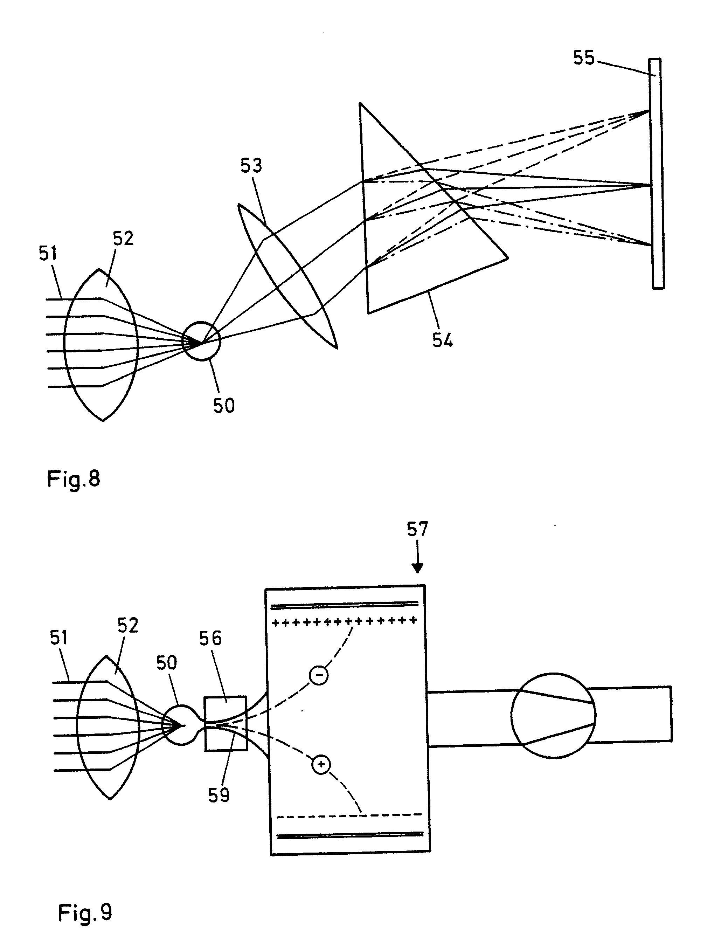

Die zu untersuchende Luft, in der die Teilchen in der Konzentrationsvorrichtung 3 konzentriert worden sind, verlassen die Nachweiseinrichtun in Richtung des Pfeiles 2 über einen Auslaß 12. Sie gelangen dann in eine Analysiervorrichtung 13. Ausführungsbeispiele der Analysiervorrichtung werden im folgenden anhand der Figuren 8 und 9 näher erläutert.

Nach der Messung des Anteils an Asbeststaub in der Meßluft verläßt diese das Gerät über einen Auslaß i4 in Pfeilrichtung 15.

Fig. 2 zeigt ein Beispiel der Konzentrationsvorrichtung, wobei ein Wandabschnitt des Strömungskanals 1, 6 als feinporiges Filter 16 ausgebildet ist. Der Strömungskanal verjüngt sich im Bereich dieses Filters konisch, wie zeichnerisch dargestellt. Partikelfreie Abluft verläßt die Konzentrationsvorrichtung durch den Auslaß 4 in Richtung des Pfeiles 5.

Die Zahlenangaben in Fig. 2 erläutern auch, daß bei einer eingangsseitigen Strömungsrate von 6 cm³ pro Sekunde eine Konzentration der Meßluft um den Faktor 20, d.h. auf 0,3 cm³ pro Sekunde erreicht werden kann. Gereinigte Abluft verläßt die Vorrichtung mit einer Strömungsrate von beispielsweise 5,7 cm³ pro Sekunde.

Fig. 3 zeigt als Ausführungsbeispiel eine Konzentrationsvorrichtung, die mittels Ultraschall arbeitet. Hierzu sind Ultraschallgeber 17 vorgesehen, und zwar beidseits des Strömungsweges oder auch in einer ringförmigen Anordnung. Sie sind so angeordnet und abgestimmt, daß sie stehende Wellen im Strömungspfad 1, 6 erzeugen derart, daß die Staubpartikel sich in den etwa in der Mitte des Strömungspfads befindlichen Knoten der stehenden Wellen ansammeln. Sie werden dann in Richtung der Pfeile 2 aus der Vorrichtung ausgetragen.

Fig. 4 zeigt ein Ausführungsbeispiel, bei dem ein Teil der Wandung des Strömungspfades durch Elektroden 18 gebildet werden, die bei diesem Ausführungsbeispiel positiv aufgeladen sind. Dementsprechend werden auch die Teilchen positiv aufgeladen, wie bei Position 19 angedeutet. Längs einer Strecke 20 können sie entladen werden.

Auch in den Fig. 3 und 4 sind Zahlen angegeben, die, wie vorstehend zu Ziffer 2 erläutert, die jeweiligen Strömungsraten angeben.

Fig. 5 erläutert das Prinzip, nach dem die Nachweiseinrichtung 7 arbeitet.

Die zu untersuchende Luft, mit Partikeln gemischt, strömt durch ein Rohr 21, das mittig in einem größeren Rohr 22 angeordnet ist. Dem Rohr 22 wird Zuluft in Richtung des Pfeiles 8 nach Fig. 1 zugeleitet. Dadurch werden in den Partikeln enthaltene Fasern in Strömungsrichtung ausgerichtet. Diese verlassen daher ausgerichtet die Mündung 23 des Rohres 22.

Stromab der Mündung ist ein von einer Linse 24 gebündelter Laserlichtstrahl 25 vorgesehen, der von einer Lichtfalle 26 normalerweise abgeschirmt wird.

Tritt ein Teilchen 27 in den Lichtstrahl 25, so wird das Licht am Teilchen gebeugt und das gebeugte Licht fällt auf einen hinter der Lichtfalle angeordneten Detektor 28. Der Strahlenkegel des gebeugten Lichtes ist bei Pos.29 angedeutet. Auf dem Detektor 28 ergibt sich also eine Beugungsfigur, aus der sich darauf schließen läßt, 0b es sich bei dem Teilchen 27 um eine Faser handelte oder nicht.

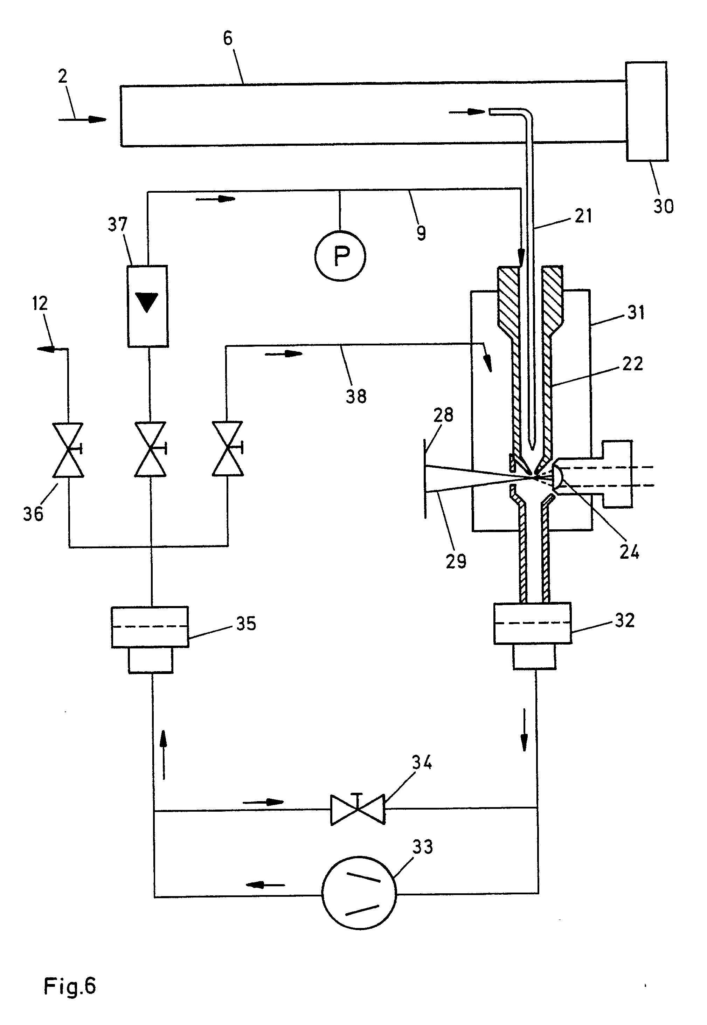

Fig. 6 erläutert das Aerosol- und Luftumwäzsystem der Nachweiseinrichtung 7. Darin sind auch gezeigt ein Lüfter 30, eine Meßkammer 31, die die Rohre 21, 22 enthält sowie die Laserlichtanordnung, ein Filter 32, eine Umwälzpumpe 33, einen Bypass 34, einen weiteren Filter 35, Regulierventile 36, einen Durchflußmesser 37 und eine Spülluftzufuhr 38.

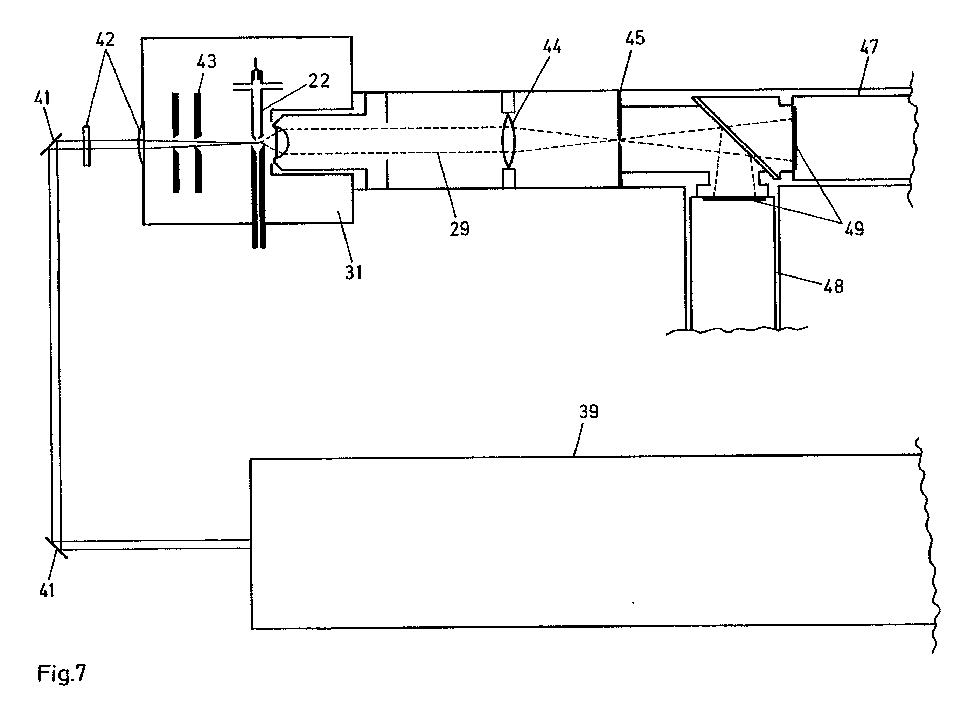

Im folgenden wird anhand von Fig. 7 das Prinzip der optischen Anordnung der Nachweiseinrichtung 7 erläutert.

Ein Helium-Neon-Laser 39 sendet das Licht über Umlenkspiegel 40 und Linsen 41 sowie durch Rechteckblenden 43 in die Meßkammer 3i.

Der Lichtstrahl gelangt hinter der Nachweisstelle durch eine Feldlinse 44 und eine Blende 45 auf einen Strahlteiler 46. Das durch den Strahlteiler hindurchgehende Licht gelangt zu einem ersten Detektor 47 und das abgelenkte Licht gelangt zu einem zweiten Detektor 48. Beide Detektoren arbeiten mit Photomultipliern 49.

Fig. 8 erläutert ein Ausführungsbeispiel der Analysiervorrichtung 13. Dabei ist der Strömungskanal, durch den die Meßluft mit den zu messenden Teilchen 27 hindurchströmt, bei Pos. 50 angedeutet.

Laserlicht 51 wird über eine Linse 52 gebündelt und gelangt durch die - dort durchsichtige - Wand des Strömungskanals 50 in den Strömungskanal, wo das Laserlicht fokussiert wird. Trifft das fokussierte Laserlicht auf eines der Teilchen 27, so wird das Licht durch das Teilchen aktiviert. Das davon ausgehende Spektrallicht gelangt durch eine Linse 53 und ein Prisma 54 und von dort auf einen Detektor 55.

Bei der Analysiervorrichtung nach Fig. 9 gelangt das Laserlicht ebenfalls in das Innere des Strömungskanals 50, wo das Teilchen durch das Laserlicht verdampft wird. Über einen fluidischen Schalter werden die Elemente des betreffenden Teilchens 27 in einem Massenspektrometer 57 analysiert. Bei Pos. 58 ist eine Vakuumpumpe des Massenspektrometers angedeutet.

Die Nachweisempfindlichkeit des Geräts ist vergleichbar mit der der VDI-Methode, bei der in etwa 8 Stunden 10 Liter Luft untersucht werden, eine gefundene Faser also einer Konzentration von 100 Fasern / m³ der untersuchten Raumluft entspricht.

Die Anreicherung der angesaugten Luft durch Entzug staubfreier Luft vergrößert das scheinbar untersuchte Luftvolumen. Die Meßzeit kann daher von fast 8 Stunden auf 20 Minuten reduziert werden.

Nach Fig. 2 wird ein Großteil der angesaugten Luft über feinporige Filter entzogen. Eine Ablagerung des zu analysierenen Staubes kann durch unterschiedliche Maßnahmen, wie besondere Oberflächenbehandlung der Filter, akustische oder mechanisch angeregte Vibration der Filter oder rhytmisches Freiblasen vermieden werden.

Die erkannte Faser muß auf Asbest hin untersucht werden. Eine Auswerteschaltung ordnet hierzu die in der Nachweiseinrichtung 7 erkannten Fasern den in der Analysiervorrichtung 13 untersuchten Fasern zu. Die Identifikation der Fasern erfolgt

7 EP 0 422 540 A2 8

während der Verweilzeit der Fasern in einem in der Vorrichtung 13, z.B. durch thermische Anregung mittels Laser und Analyse der emittierten Licht-Spektralverteilung mittels hochempfindlicher Detektoren (Fig. 8) oder durch Verdampfen der Faser mittels Laser und Bestimmung der Elemente mittels Massenspektrometrie (Fig.9).

Die Verweilzeit des Plasmas kann dabei durch geeignete Verzögerung des Kernstrahls der Luftströmung in einem sich aufweitenden Strömungskanal 59 verlängert werden.

**Ansprüche**

1. Gerät zur Messung des Anteils an Asbeststaub in Luft mit einem Einlaß (6) für die zu messende Luft, mit einem mit dem Einlaß in Strömungsverbindung stehenden Auslaß (12) und mit einer Nachweiseinrichtung (7) für Fasern,
**dadurch gekennzeichnet,**
daß dem Einlaß (6) eine Vorrichtung (3) zum Konzentrieren des Staubanteils in der Luft vorgeschaltet ist und daß dem Auslaß (12) eine Vorrichtung (13) zum Analysieren der in der Nachweiseinrichtung nachgewiesenen Fasern nachgeschaltet ist.

2. Gerät nach Anspruch 1,
**dadurch gekennzeichnet,**
daß die Konzentrationsvorrichtung (3) ein feinporiges Filter (16) als Teil der Wandung des Strömungskanals zum Einlaß der Nachweiseinrichtung aufweist, wobei Mittel vorgesehen sind, die ein Anhaften der Teilchen am Filter verhindern.

3. Gerät nach Anspruch 1,
**dadurch gekennzeichnet,**
daß die Konzentrationsvorrichtung (3) einen Ultraschallgenerator (17) aufweist, der im Strömungskanal stehende Wellen erzeugt.

4. Gerät nach Anspruch 1,
**dadurch gekennzeichnet,**
daß die Konzentrationsvorrichtung (3) einen luftdurchlässigen, elektrostatisch aufladbaren Wandabschnitt (18) des Strömungskanals aufweist.

5. Gerät nach einem der Ansprüche 1 - 4,
**dadurch gekennzeichnet,**
daß die Analysevorrichtung (13) einen Laser aufweist, dessen Laserstrahl (51) die im Strömungskanal (50) fliegenden Teilchen (27) trifft.

6. Gerät nach Anspruch 5,
**dadurch gekennzeichnet,**
daß das von den vom Laserstrahl (51) getroffenen Teilchen ausgehende Licht einer Einrichtung zur spektralen Untersuchung (55) zugeführt wird.

7. Gerät nach Anspruch 5,
**dadurch gekennzeichnet,**
daß die von dem Laserstrahl (51) getroffenen Teilchen (27) in einem Massenspektrometer (57) untersucht werden.

5

Fig.1

Fig. 2

Fig. 3

Fig. 4

Fig.5

Fig.6

Fig.7

10

Fig.8

Fig.9